# EUROPEAN PATENT APPLICATION

(11) **EP 2 469 840 A1**
(43) Date of publication of application: **27.06.2012**
(21) Application number: 10306469.7
(22) Date of filing: 21.12.2010
(51) Int. Cl.: H04N 5/445

(54) **Dynamic resizing of an electronic program guide (EPG)**

(71) Applicant: Thomson Licensing, 92130 Issy-les-Moulineaux (FR)
(72) Inventor: Longet, Aurelien, 35700, Rennes (FR); Langlois, Tristan, 35410, Chateaugiron (FR); Babon, Frédéric, 35220 Saint Jean sur Vilaine (FR); Gallardo, Patrick, 35140, Vendel (FR)
(74) Representative: Thies, Stephan

(57) **Abstract**

The present invention concerns a method for displaying a program guide is proposed. The program guide contains a list of channels and a time scale and the programs which are receivable within a time represented by the time scale are displayed. The programs which are displayed correspond to the channel on which the programs are received. The inventive method further contains the following steps:
- checking if a specific program is selected,
- if a program is selected, checking if the time scale includes the start time and the end time of the program,
- if the time scale does not include the start time or the end time of the program, adapting the time scale such that it includes the start time and the end time of the program, and
- displaying the program guide using the adapted time scale.

## Description

The present invention relates to a method for resizing an Electronic Program Guide (EPG) according to size of the display device and the size of the items to be displayed.

In a television receiver, broadcast data is received on program channels including descriptive data representing the content of a program, also called EPG data.

A traditional EPG enables to display basic information (like « title », « genre ») for each TV program. The TV events are organized depending on their channel and their time slot.

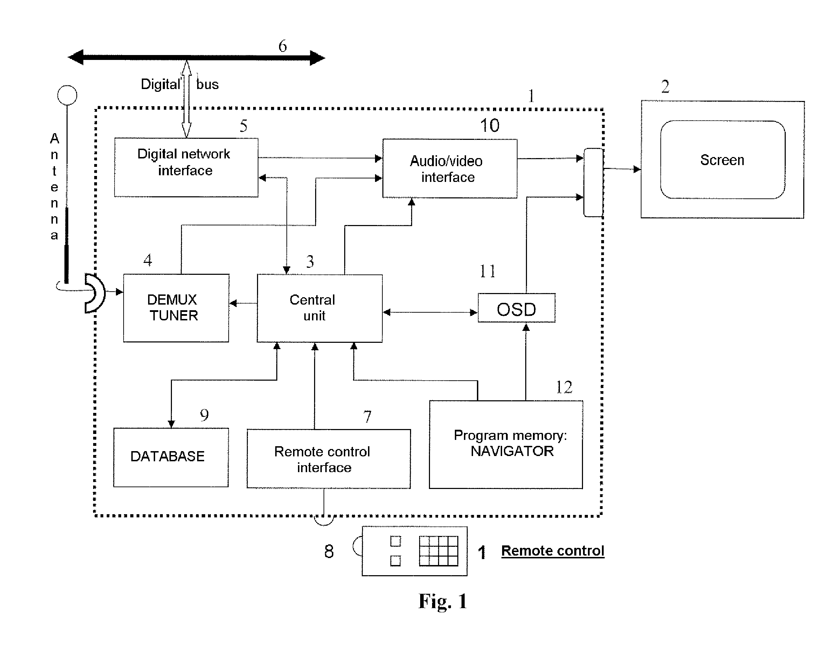

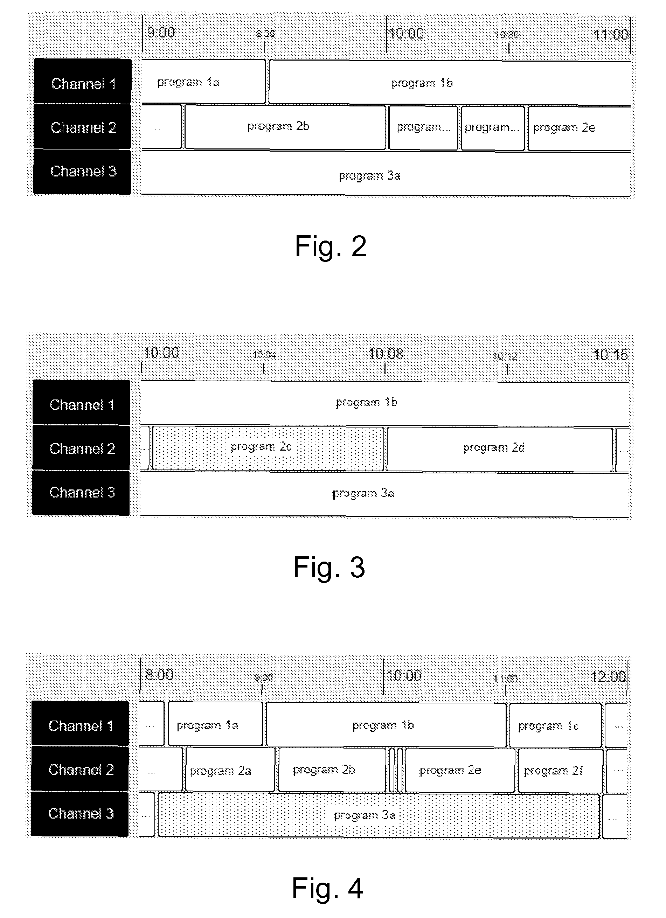

Fig. 1 shows an EPG as known in the art. An EPG is generally made up of boxes that represent different programs, one line of boxes per channel. The boxes are presented according to their appearance in time. In Fig. 2, parts of program program_1a and program program_1b are broadcast on channel 1 between 9:00 and 11:00. The beginning of program program_1a and the end of program program_1b is not visible within this timeslot, thus it is not represented in the program guide. This is uncomfortable for a user because he does not have access to all information. The same is true for channels 2 and 3. On the other hand, programs program_2c and program_2d are too short to display all program information within their boxes using this time scale.

Japanese Laid-Open Patent Application JP2000-244835 discloses an EPG dealing with the problem of presenting information. The main goal of this reference is to synthesize a user adapted EPG. All events the user is probably not interested in, e.g. because he does not have access to a channel, or because he does not watch TV at all at a certain time, are removed from the EPG.

Despite the fact that an EPG according to this reference does not have a continuous time scale, the visible time scale remains always the same, namely 4 hours in steps of 30 minutes.

The present invention solves the problem of EPGs known in the art in particular when a program duration is too short or too long compared to the used time scale. Indeed, the static display used by traditional EPGs does neither allow to display legibly program information when the duration is too short, as in programs program_2c and program_2d, nor to display the beginning or the end of a program on the grid when the duration is too long, as in program program_3a.

According to the invention, a method for displaying a program guide is proposed. The program guide contains a list of channels and a time scale and the programs which are receivable within a time represented by the time scale are displayed. The programs which are displayed correspond to the channel on which the programs are received. The inventive method further contains the following steps:
- checking if a specific program is selected,
- if a program is selected, checking if the time scale includes the start time and the end time of the program,
- if the time scale does not include the start time or the end time of the program, adapting the time scale such that it includes the start time and the end time of the program, and
- displaying the program guide using the adapted time scale.

According to an improvement, the method further contains the steps of:
- checking if all information to be displayed in the program guide is displayable within the space provided according to the time scale for the selected program,
- if not all information is displayable for the selected program, adapting the time scale such that all information to be displayed in the program guide is displayable within the space provided according to the time scale for the selected program.

Alternatively, or in addition, the height of the box to be displayed is increased. With height in a more generalized form a direction different to the direction of the time scale is referred to.

The present invention suggests modification of the time scale according to the selected program duration. This has the advantage that a program is always displayed so that all pieces of information are visible and the beginning and the end of the event are displayed on the screen. For a selected event all displayed pieces of information are fully legible to the user.

Alternatively, or in addition, the size in a direction other than the direction of the time scale is changed.

According to a further improvement, the method contains the following steps:
- displaying the program guide in the original view with the original time scale, and
- displaying a window representing a part of the program guide using the adapted time scale.

This has the advantage that the program guide as originally displayed is kept and the program guide using the adapted time scale is presented in a separate window. Advantageously, this separate window is shown in front of the original program guide. The original program guide may be displayed with less brightness or only as a shadow in the background while the separate window is in the foreground. This has the advantage that the user also keeps the original program guide and might switch back to the original view.

The invention further concerns an electronic program guide which includes a list of channels and a time scale. The electronic program guide includes means for displaying programs which are receivable within a time represented by the time scale and the programs are displayed corresponding to the channel on which the program is received. Further it includes means for selecting a specific program, and if a specific program is selected, the time scale is adapted by means for adapting the time scale in that it does at least include the start time and the end time of the selected program. According to an improvement, the time scale is adapted to ensure the space between start time and stop time is sufficient to displaying all EPG information related to the selected program.

Also using 3D representation and displaying the selected event in a plane closer to the user with an innovative style zoom is within the scope of the invention.

The invention is described below using an electronic program guide received by a broadcast receiver for multimedia broadcast as an example. It is apparent to a person skilled in the art that the invention is applicable within program guides for other applications.

For better understanding the invention shall now be explained in more detail in the following description with reference to the figures. It is understood that the invention is not limited to this exemplary embodiment and that specific features can also expediently be combined and/or modified without departing from the scope of the present invention.
- Fig. 1: schematically shows a multimedia receiver,
- Fig. 2: shows an EPG as known in the art,
- Fig. 3: shows an EPG according to the invention scaled in accordance with a first program,
- Fig. 4: shows an EPG according to the invention scaled in accordance with a second program,

Fig. 1 schematically depicts a television or multimedia receiver 1 connected to a display device 2. The receiver 1 comprises a central unit 3 linked to a program memory 12, and an interface 5 for communication with a high bit rate local digital bus 6 making it possible to transmit audio/video data in real time. This network is for example an IEEE 1394 network. The receiver 1 receives audio/video data from a broadcasting network through a reception antenna associated with a demodulator 4. The receiver 1 furthermore comprises a remote control interface, here an infrared signal receiver 7, for receiving the signals from a remote control 8, a memory 9 for storing a database, and an audio/video decoding logic 10 for creating audiovisual signals to be sent to the display device 2. The remote control is furnished with direction keys ↑, ↓, → and ← and keys: "OK" and "Select" (not shown here) the function of which is described below.

The receiver 1 also comprises a circuit 11 for displaying data on the screen, often called the OSD circuit, the initials standing for "On Screen Display". The OSD circuit 11 is a text and graphics generator which enables menus and pictograms (for example, a number corresponding to the station displayed) to be displayed on the screen of the display device 2 and which enables the navigation menus in accordance with the present invention to be displayed. The OSD circuit 11 is controlled by the Central Unit 3 and a navigator 12' present in the program memory 12. The navigator 12' is advantageously made in the form of a program module recorded in a read only memory. It may also be embodied in the form of a custom circuit of ASIC type for example.

Via the digital bus 6 and/or the broadcasting network the receiver 1 receives data comprising multimedia documents and descriptive data pertaining to these documents. These data originate either from a broadcasting network, or from the digital network 6. The descriptive data comprise classification elements also called "attributes", for the accessible multimedia documents. The descriptive data are for example contained in the service information specified in the DVB-SI Standard. These data are stored in the database of the memory 9 of the receiver 1 and are continuously updated. The navigator 12' thereafter extracts the information from this database and processes it to produce the navigation menus displayed on the screen of the display device 2.

In general boxes of the programs shown in the EPG are often too small or too big to correctly display the program duration and all available pieces of information or all pieces of information which are intended to be displayed. The inventors found that this problem is caused by the fixed time scale. According to Fig. 2, the used time scale is fixed and split up in 30 minutes time slots. Thus, the beginning of the programs program_1a on channel 1, program_2a on channel 2 and program_3a on channel 3 cannot be displayed because these programs begin at a time earlier than represented by the time scale to be displayed. On the other hand, the end of the programs program_1b on channel 1, program_2e on channel 2 and program_3a on channel 3 are too late to be displayed within the time scale. In addition, programs program_2c and program_2d on channel 2 have a short duration of about 20 minutes. For these durations, according to the time scale, only a short segment is available. This segment does not allow to display all the information which should be displayed for these programs. In Fig. 2, the space is not sufficient to display the whole words "program 2c" and "program 2d". In a program guide according to the invention, the information to be displayed is e.g. title, actor information, genre, year of a movie, or other short comments.

For these two cases, according to the invention, the time scale is changed to show a shorter time period. This has the effect, that a bigger space is available to show the program information. In Fig. 3 it is depicted that program program_2c is selected. Thus, because for the selected program not all information is displayed in Fig. 2, the time scale is dynamically changed. Thus, the program guide is enabled to display the selected event well. Non selected events are automatically resized based on the new time scale. Thereby, the grid display mode remains consistent for all program events.

In case program program_3a on channel 3 is selected, the time scale is changed dynamically according to Fig. 4. In normal view of Fig. 2, the start time and the stop time of program program_3a are not within the displayed time scale. Thus, the time scale is adapted to display a longer period of time.

## Claims

1. Method for displaying a program guide, the program guide containing a list of channels and a time scale and displaying programs which are receivable within a time interval represented by the time scale and the programs are displayed corresponding to the channel on which the programs are received, **characterized in that** the method contains the steps of:
- checking if a specific program is selected,
- if a program is selected, checking if the time scale includes the start time and the end time of the program,
- if the time scale does not include the start time or the end time of the program, adapting the time scale such that it includes the start time and the end time of the program, and
- displaying the program guide using the adapted time scale.

2. Method for displaying a program guide according to claim 1, **characterized in that** it further contains the steps of:
- checking if all information to be displayed in the program guide is displayable within the space provided according to the time scale for the selected program,
- if not all information is displayable for the selected program, adapting the time scale such that all information to be displayed in the program guide is displayable within the space provided according to the time scale for the selected program.

3. Method for displaying a program guide according to claim 1 or 2, **characterized in that** the displaying step includes:
- displaying the program guide in the original view with the original time scale, and
- displaying a window representing a part of the program guide using the adapted time scale.

4. Electronic program guide including a list of channels and a time scale, the electronic program guide is displaying programs which are receivable within a time represented by the time scale and the programs are displayed corresponding to the channel on which the program is received, **characterized in that** if a specific program is selected, the time scale is adapted **in that** it does at least include the start time and the end time of the selected program.

5. Electronic program guide according to claim 4, **characterized in that** the time scale is adapted to ensure the space between start time and stop time is sufficient to display all EPG information related to the selected program.
